Europäisches Patentamt

European Patent Office

Office européen des brevets

(19)

(11) Veröffentlichungsnummer: **0 302 462 B1**

(12) **EUROPÄISCHE PATENTSCHRIFT**

(45) Veröffentlichungstag der Patentschrift: **12.05.93**

(51) Int. Cl.⁵: **A23K 1/00**, A23P 1/02, A23K 1/17

(21) Anmeldenummer: **88112591.8**

(22) Anmeldetag: **03.08.88**

(54) **Stabilisierter Futtermittelzusatz und Verfahren zu seiner Herstellung.**

(30) Priorität: **05.08.87 DE 3725946**

(43) Veröffentlichungstag der Anmeldung:
**08.02.89 Patentblatt 89/06**

(45) Bekanntmachung des Hinweises auf die
Patenterteilung:
**12.05.93 Patentblatt 93/19**

(84) Benannte Vertragsstaaten:
**AT BE CH DE ES FR GB GR IT LI LU NL SE**

(56) Entgegenhaltungen:
**EP−A− 0 146 680**
**EP−A− 0 165 577**
**DE−A− 2 932 803**
**US−A− 3 627 885**

**CHEMICAL ABSTRACTS, Band 101, Nr. 8, 20.
August 1984, Seite 305, Zusammenfassung
Nr. 60112b, Columbus, Ohio, US; N.I.
GEL'PERIN et al.: "Drying of bacitracin", &
DEPOSITED DOC. 1982, SPSTL 768 Khp−D82,
126−34**

(73) Patentinhaber: **BOEHRINGER INGELHEIM
VETMEDICA GMBH**

**W−6507 Ingelheim/Rhein(DE)**

(72) Erfinder: **Schleicher, Werner, Dr.
Friedrichstrasse 9
W−6530 Bingen/Rhein(DE)**
Erfinder: **Werner, Herbert
Binger Strasse 228
W−6507 Ingelheim am Rhein(DE)**

**Beschreibung**

Die Erfindung betrifft einen Futtermittelzusatz, der, vermischt mit einem Futtermittel, eine verbesserte Stabilität gegenüber Hitze − und Feuchtigkeitseinwirkung und mechanischer Bearbeitung aufweist, so daß der im Futtermittel enthaltene Zusatz auch längerer Lagerung, selbst unter ungünstigen Bedingungen, seine biologische Aktivität beibehält.

Futtermittelzusätze im Bereich der Tieraufzucht sind beispielsweise die sogenannten Leistungsförderer, die dem Futter in geringer Dosierung zugesetzt werden und zu einer besseren Futterausnutzung und zu einer erhöhten täglichen Gewichtszunahme führen. Neben der Gruppe der Leistungsförderer ist es auch üblich, Arzneimittel, dem Futter zuzusetzen. Im Sinne der Erfindung werden auch diese Verbindungen als Futtermittelzusätze bezeichnet.

Von besonderem Interesse ist Zinkbacitracin als Futtermittelzusatz, ein zyklisches Polypeptid, das in fester und gelöster Form relativ stabil ist. In Futtermischungen ist Zinkbacitracin wesentlich instabiler, wofür zum einen die Einwirkung von Hitze und Feuchtigkeit beim Pelletieren des Futters sowie die mechanische Beanspruchung beim Mischvorgang des Futtermittelzusatzes mit dem Futter, zum anderen Reaktionen mit den im Futter vorhandenen Schwermetallen, wie Kupfer und Eisen sowie mit organischen Verbindungen, wie z.B. Fette, Ascorbinsäure etc. verantwortlich gemacht werden.

Zur Stabilisierung von Zinkbacitracin in Futtermischungen wurden zahlreiche Anstrengungen unter − nommen, um die bekannten Nachteile zu vermeiden. Bislang ist es jedoch nicht gelungen, eine auch in der Praxis voll befriedigende Lösung des Problems, der Abnahme des Gehalts an Zinkbacitracin unter normalen und besonders unter ungünstigen Verarbeitungs − und Lagerbedingungen, zu finden, so daß infolge der Unsicherheit über den Gehalt an Zinkbacitracin eine "vorsorgliche" Überdosierung nicht auszuschließen war. Aus der neueren Literatur ist aus der europäischen Patentanmeldung Nr. 165 577 ein Verfahren bekannt, bei dem das Zinkbacitracin nach dem sogenannten Wirbelschichtgranulierungsverfahren mit einem Polymer überzogen wird. Trotz guter Ergebnisse dieses Verfahrens hat sich herausgestellt, daß die vorgeschlagene Lösung nicht unter allen Bedingungen voll befriedigt. Untersuchungen haben ergeben, daß die Haltbarkeit in starkem Maße von der verwendeten Futtermischung abhängt. Als besonders kritisch sind beispielsweise Mineralfuttermischungen und pelletiertes Broilerfutter anzusehen.

Es ist die Aufgabe der vorliegenden Erfindung einen Futtermittelzusatz bereitzustellen, der auch in den sogenannten kritischen Futtermitteln eine ausreichende Stabilität bei der Verarbeitung und Lagerung des Futters aufweist.

Diese Aufgabe wird durch die Ansprüche 1 − 5 gelöst.

Erfindungsgemäß wird die Aufgabe durch einen nach dem sogenannten Spaltkreisel − Dynamikfilter − Granulierverfahren (SKD) überzogenen Futtermittelzusatz gelöst. Bei dem SKD − Verfahren wird das pul − verförmige Ausgangsmaterial in einem Spaltkreisel − Wirbelschichtgranulierer (z.B. HSP − 5/10, Fa. Hüttlin, Steinen) mit dem Überzugsmaterial vollständig überzogen. Die technische Apparatur zur Durchführung des Verfahren ist in der deutschen Patentschrift 29 32 803 und in der Europäischen Patentschrift 146 680 offenbart. Überraschenderweise hat sich gezeigt, daß ein unter Anwendung der dort beschriebenen Apparatur mit einem Überzug versehener Futtermittelzusatz eine wesentlich verbesserte Stabilität aufweist, als ein Präparat, das in einem herkömmlichen Wirbelschichtgranulierer überzogen wurde. Weitere Vorteile gegenüber den herkömmlichen Präparaten sind, daß das erfindungsgemäße Präparat eine sehr enge Korngrößenverteilung aufweist, die in weiten Bereichen einstellbar ist, daß das Präparat eine bessere Rieselfähigkeit aufweist, daß der Geruch stark riechender Ausgangsprodukte stark zurückgedrängt ist.

Als Überzugsmaterialien sind Verbindung geeignet, wie sie auch als Überzugsmaterialien in der pharmazeutischen Galenik verwendet werden, so z.B. Polyacrylate, Polyacrylsäuren, Polyacrylester, Polya − cyrylamide, Polysaccharide, anorganische Überzugsmaterialien, wie z.B. Silikate oder Carbonate, soweit sie in Wasser oder leichtflüchtigen organischen Lösungsmittel oder Lösungsmittelgemischen löslich oder gut suspendierbar sind. Im Fall, daß der Futtermittelzusatz nicht Zinkbacitracin ist, sind auch Fette, Lipide, Lecithin und Wasser als Überzugsmaterialien geeignet. Als anorganische Überzugsmaterialien sind weiterhin die folgenden Verbindungen geeignet: Bentonit, Montmorillonit, Calciumsilikat, Kaolinit − Tone, Kieselgur, Kieselsäuren (gefällt und getrocknet), Natriumaluminiumsilikat, Siliciumdioxid, Perlit, Vermiculit. Als Über − zugsmaterialien mit basichem Charakter können beispielsweise Calciumhydrogenorthophosphat, Calcium − oxid, Calciumtetrahydroorthophosphat, Diammoniumhydrogenorthophosphat, Dicalciumdiphosphat, Dinatri − umdihydrogendiphosphat, Dinatriumhydrogenorthophosphat, Kalimdihydrogenorthophosphat und/oder Na − triumdihydrogenorthophosphat verwendet werden.

Bevorzugte Überzugsmaterialien sind Cellulosen, insbesondere Hydroxypropylmethylcellulose, Natrium − carboxymethylcellulose, Hydroxyethylcellulose und Methylcellulose. Weiterhin geeignet sind Ethylcellulose, Celluloseacetatphthalat, Celluloseacetatsuccinat, Hydroxypropylmethylcellulosephthalat, Po −

lyvinylacetat, Polyvinylpyrrolidone, Alginsäuren, Polyethylenglycole, Hexadecylalkole, Hydroxypropylcellulose. Das Überzugsmaterial kann auch aus einer Mischung der zuvor aufgeführten Verbindungen zusammengesetzt sein. Als Futtermittelzusätze im Sinne der Erfindung werden bevorzugt die folgenden Verbindungen aufgeführt: Virginiamycin, Tylosin, Spiramycin, Nosiheptid, Penicilline, Chlortetracycline, Oxytetracycline, Tetracycline, Erythromycine, Furazolidon, Nitrofuran, Thrimethoprim, Sulfonamide, Dimetridazol, Neomycin-Base.

Von besonderem Interesse ist Zinkbacitracin.

Futtermittelzusätze, soweit sie nach einem biologischen Verfahren hergestellt werden, sind zumeist mit einem Trägermaterial, z.B. Calciumcarbonat, vermischt. Sowohl die Herstellung wie auch die Isolierung dieser Verbindungen sind Stand der Technik und bedürfen keiner weiteren Ausführungen.

Der Anteil des Überzugsmaterials beträgt zwischen 2,5 und 30 Gew.%, bevorzugt 4 bis 20 Gew. %, besonders bevorzugt sind 5 bis 10 Gew. % bezogen auf das eingesetzte Ausgangsmaterial einschließlich eventuellen Trägermaterials. Es ist hierbei selbstverständlich, daß auch bei einem höheren Anteil an Überzugsmaterial eine Stabilisierung des erfindungsgemäßen Futtermittelzusatzes erreicht wird, wobei es jedoch im Rahmen der Erfindung ist, die Menge an Überzugsmaterial möglichst gering zu halten. Im allgemeinen setzt sich das Ausgangsmaterial aus ca. 25 % Zinkbacitracin und ad 100 % Trägerstoffen zusammen. Das erfindungsgemäße Präparat wird nach folgendem Verfahren hergestellt:

Das pulverförmige Ausgangsmaterial, beispielsweise mit einer Partikelgröße zwischen 1 und 60$\mu$m, wird in der zuvor genannten Spaltkreisel-Dynamikfilter-Granulier-Apparatur vorgelegt. Die über die rotierenden Spaltkreisel-Spalten in das Pulverbett einströmende Luft fluidisiert das Produkt. Anschließend wird in diese Fluidisierungszonen eine ca. 3 bis 10 %ige, bevorzugt 5 bis 10 %ige Lösung bzw. Suspension des Überzugsmaterials, die als Granulierungsflussigkeit dient, von unten in die Wirbelschicht eingesprüht. Die einzelnen Prozeßparameter, wie z.B. Zuluftmenge, Zulufttemperatur, Ablufttemperatur, Abluftfeuchte, Sprühdüsendurchmesser, Sprührate, Drehzahl Spalt/Düse sind u.a. von der Größe der verwendeten Apparatur abhängig. Konkrete Angaben hierzu finden sich in den Beispielen. Wenn es gewünscht wird, kann der Granulierprozeß unter Anwendung eines Inertgases, wie z.B. Stickstoff, durchgeführt werden.

Gegenüber herkömmlichen Granulierverfahren, z.B. der Wirbelschichtgranulierung, ist die gesamte Prozeßzeit stark verkürzt. Ein weiterer Vorteil ist, daß das Präparat nicht nur granuliert wird, sondern der Überzug das Ausgangsmaterial vollständig als Coating umhüllt. Der Unterschied zu herkömmlichen Granulierverfahren, bei denen der Überzug unvollständig ist, kann durch Aufnahmen mit dem Rasterelektronenmikroskop belegt werden.

Aufgrund der sehr glatten Oberfläche, zeigt das erfindungsgemäße Produkt eine sehr gute Rieselfähigkeit. Der nach dem erfindungsgemäßen Verfahren hergestellte Futtermittelzusatz zeigt eine typische, relativ enge Korngrößenverteilung. In Abbildung I und II ist die Korngrößenverteilung am Beispiel des Futtermittelzusatzes Zinkbacitracin dargestellt. Bei der herkömmlichen Wirbelschichtgranulation kann ein solches Spektrum nur nach mehrfacher Siebung und Mischung erzielt werden.

Im Gegensatz zu herkömmlich hergestellten Produkten zeigt das erfindungsgemäße praktisch keinen Feinstaubanteil und keinen Abrieb. Die mit Hilfe des SKD-Verfahrens hergestellten Futtermittelzusätze zeigen im Stauber-Heubach-Test (Fresenius; Z. Anal. Chem. (1984), 318: 522-524) keinen nachweisbaren Abrieb von Wirksubstanz. In der Tabelle I sind die Ergebnisse von typischen Mischchargen dargestellt. Besonders beachtenswert ist, daß im sogenannten Feinstaubanteil kein Zinkbacitracin nachzuweisen ist. Damit ist ausgeschlossen, daß es beim bestimmungsgemäßen Umgang mit diesem Futterzusatzstoff zu einer Gesundheitsgefährdung der in den Futtermühlen tätigen Personen kommt.

Ein weiterer Vorteil des so hergestellten Granulats besteht in der Verhinderung von Staubexplosionen, die beim Umgang mit feinpulverigen Substanzen oft ein Risiko darstellen.

Die aufgezählten Eigenschaften bieten wesentliche Vorteile bei der Weiterverarbeitung des Futtermittelzusatzes, so z.B. beim Vermischen mit Futter und beim Pelletieren des Futters.

Die verbesserte Haltbarkeit des Futtermittelzusatzes in der fertigen Futtermittelmischung wirkt sich besonders vorteilhaft bei pelletierten Futtermittelmischungen aus. Beim Pelletieren wird das Futter kurzzeitig hohen Temperaturen (bis 140°C), Feuchtigkeit (Heißdampf) und Drücken ausgesetzt. Erfahrungsgemäß wirkt sich dies sehr nachteilig auf die Haltbarkeit, im Sinne der biologischen Aktivität, des Futtermittelzusatzes aus.

Der erfindungsgemäße Futtermittelzusatz, insbesondere Zinkbacitracin enthaltend, wird im allgemeinen dem Futter in einer Konzentration zwischen 20 und 1000 ppm beigemischt.

Nachfolgend wird die Erfindung am Beispiel von Zinkbacitracin als Futtermittelzusatz näher erläutert.

Herstellung von stabilisiertem Zinkbacitracin – Granulat mit Hilfe der Spaltkreisel – Dynamikfilter – Granulier – apparatur (SKD)

Beispiel 1:

| Zusammensetzung: | 95,0 g Zinkbacitracin (Gehalt an Zinkbacitracin mind. 21,1%) |
| | 5,0 g Methylcellulose |
| | 100,0 g Zinkbacitracingranulat |

Methode: Das pulverförmige Ausgangsmaterial Zinkbacitracin mit einer Partikelgröße von 1 – 40 $\mu$m (Hauptanteil: 10 – 15 $\mu$m) wird im SKD vorgelegt.

Es wird eine 5%ige Methylcelluloselösung hergestellt, die als Granulierflüssigkeit dient.

Die über die rotierenden Spaltkreisel – Spalten in das Pulverbett einströmende Luft fluidisiert das Produkt und in diese Fluidisierungszonen wird jetzt die Granulierflüssigkeit von unten eingesprüht.

Prozeßparameter: Zuluftmenge: 150 – 250 m³/h

Zulufttemperatur: 60 – 70˚C

Sprühdüsendurchmesser: 1,2 mm

mittlere Sprührate: 18 ml/min

Drehzahl Spalt/Düse: 3 Upm

Die gesamte Sprühzeit beträgt ca 155 min, die Trocknungsphase ca. 25 min.
Die Gesamtprozeßzeit beträgt demnach ca. 180 min.

Dem gegenüber beträgt die Gesamtprozeßzeit für ein im konventionellen Wir – belschichtgranulator /z.B. WSG 200, Glatt) hergestelltes Zinkbacitracin – Granulat mehr als 8h, wobei aufgrund von großen Sekundäragglomeraten und breitem Kornverteilungsspektrum noch eine zusätzliche Siebung und Mischung erforder – lich ist.

Nach bereits 15 min ist eine Granulatbildung erkennbar. Die Granulierphase geht, vermutlich stufenlos, in eine Coatingphase über, bei der das primar gebildete Granulat allmählich von Methylcellulose eingehüllt wird. Aufnahmen mit dem Rasterelektronenmikroskop 600/1800 fache Vergröèerung zeigen unterschiedli – che glatte Oberflächen bei 2 Mustern, die mit 5,14 bzw. 9,48% Methylcellulose beschichtet wurden, wobei die höhere Coatingkonzentration zu einer glatteren Oberfläche führt.

Das mittels SKD hergestellte Endprodukt hat praktisch keinen Feinstaubanteil mehr (Partikel kleiner 45 $\mu$m = 0%) und weist ein enges Kornverteilungsspek – trum auf (Partikel 200 – 400 $\mu$m = 92%). Damit verbunden ist ein gutes Fließverhalten des Granulats (Böschungswinkel: 33,6˚, Düsenöffnung 6 mm, Fließzeit für 200 ml: ca. 75 sec.).

Beispiel 2:

Wie Beispiel 1, jedoch mit folgenden Prozenßparametern:
Zuluftmenge: 80 – 150 m³/h
Zulufttemperatur: 90 – 100˚C
mittlere Sprührate: 50 – 200 g/min
Drehzahl Spalt/Düse: 3 – 5 Upm
Im Gegensatz zu dem erfindungsgemäßen Verfahren zeigt bei einem Zinkbacitracin – Präparat (CH. – B.: 409 105), hergestellt nach herkömmlichem Verfahren, trotz Absiebung der Grobanteile die Siebanalyse eine sehr breites Kornverteilungsspektrum von <63 $\mu$m bis >1.000 $\mu$m, mit der Hauptmenge von ca. 80 % zwischen 355 u. 1.000 $\mu$m. Auffallend ist auch ein Feinstaubanteil von 2,3 % (Partikel < 63 $\mu$m), der sich bei der Handhabung des Produktes unangenehm bemerkbar macht und ein Anwendungsrisiko darstellt. Das ungünstige Kornverteilungsspektrum führt zu insgesamt schlechteren Fließeigenschaften gegenüber SKD – Granulaten. In der benutzten Meßapparatur für das Fließverhalten (Rieseltester PTG, Fa. Pharmatest) können die WSG – Granulate mit den üblicherweise benutzen Auslaufdüsen von 4 bzw. 6 mm Durchmesser nicht gemessen werden da sich die Düsen zusetzen. Erst ab einem Düsendurchmesser von 8 mm sind die WSG – Granulate freifließend, wobei die Rieseleigenschaften jedoch starken Schwankungen unterworfen sind.

Mit dem erfindungsgemäßen Verfahren wird eine Stabilisierung des Wirkstoffs Zinkbacitracin erreicht. Dadurch zeigt dieses nach Einmischung in handelsübliche Futtermittel auch nach Pelletierung für den jeweils vorgesehenen Anwendungszeitraum (3 – 4 Mon. für Deutschland) eine ausgezeichnete Stabilität im Vergleich zu einem Futtermittel mit unbehandeltem pulverförmigen Zinkbacitracin. Die mittels konventio – neller Wirbelschichttechnik hergestellten Granulate erreichen selbst mit 20 % Überzugsmaterial nicht die gleich gute chemische Stabilität in pelletiertem Futter wie die SKD – Granulate.

Tabelle I:

(Zinkbacitracinzusatz nach Beispiel 1)

Wiederfindungsrate in % Zinkbacitracin (ZBa)in verschiedenen Futtermitteln (Lagerung bei Raumtemp.).

Anfangsgehalt Zinkbacitracin: 1.000 ppm = 100 %

| Zink-baci-tracin | Zeit Wochen | Mehlfuttertypen | | | | Pelletfuttertypen | | |
|---|---|---|---|---|---|---|---|---|
| | | 2.6 | 2.16 | 7.4 | 7.7 | 2.6 | 7.4 | 7.7 |
| unbehandelte Kontrolle % ZBa | | | | | | % ZBa | | |
| | 1,5 | 116,4 | 94,6 | 89,8 | 96,5 | 90,5 | 67,5 | 81,5 |
| | 4 | 107,6 | 91,2 | 82,9 | 98,8 | 75,7 | 40,2 | 65,8 |
| | 6 | 93,1 | 68,5 | 66,2 | 86,4 | 48,8 | 24,9 | 51,1 |
| | 8 | 83,3 | 73,7 | 51,9 | 80,4 | 40,8 | 21,4 | 42,4 |

im SKD granuliert mit 5 % Methylcellulose

| Zinkbacitracin | 2.6 | 2.16 | 7.4 | 7.7 | 2.6 | 7.4 | 7.7 | |
|---|---|---|---|---|---|---|---|---|
| 1,5(2)* | 102,3 | 96,2 | 108,3 | | 107,6 | 91,4 | 98,9 | 100,8 |
| 5(6)* | 104,3 | 95,1 | 103,3 | | 100,8 | 85,5 | 85,6 | 97,1 |
| 10(12)* | 102,2 | – | 96,7 | 105,6 | 89,7 | 59,1 | 82,6 | |
| 12(13)* | 105,0 | 90,2 | 104,4 | | 97,6 | 81,2 | 54,8 | 80,0 |
| 17 | – | 89,4 | – | – | – | – | – | |

Die Angaben in Klammern beziehen sich auf die Lagerzeit der Pelletfuttertypen in Wochen.

Futter-typen:
2.6 Alleinfuttermittel für Mastschweine
2.16 Mineralfutter
7.4 Alleinfuttermittel für Mastküken
7.7 Alleinfuttermittel für Legehennen

Tabelle II:

Stauber Heubach-Test/Anwendungssicherheit

Chargen:
(nach Beispiel 2)

|  | A | B |
|---|---|---|
| Feinstaub (mg/50 g Prämix) | 0,20 | 0,27 |
| Zinkbacitracin (mcg/ 50 g Prämix) | n.n. (< 1 mcg) | n.n. (<1 mcg) |

X (A/B)  0,24    (Feinstaub/50 g Prämix) ZBa: n.n.

± s      0,049

Überzugsmaterial: Methylcellulose
x = Mittelwert, s = Standardabweichung

nn = nicht nachweisbar
ZBa = Zinkbacitracin

**Patentansprüche**

1. Mit einem physiologisch unbedenklichen Polymer überzogener Futtermittelzusatz mit verbesserten Eigenschaften, dadurch gekennzeichnet, daß der Polymerüberzug eine glatte, geschlossene Oberfläche aufweist, wobei der Anteil des Polymerüberzugs zwischen 2,5 und 30 Gew.-% bezogen auf das Ausgangsmaterial beträgt und unter Anwendung des Spaltkreisel-Dynamikfilter-Granulierungsverfahrens aufgebracht wird.

2. Futtermittelzusatz nach Anspruch 1, dadurch gekennzeichnet, daß der Futtermittelzusatz Zinkbacitracin enthält.

3. Futtermittelzusatz nach Anspruch 1 oder 2, dadurch gekennzeichnet, daß das Überzugsmaterial aus der Gruppe Hydroxypropylmethylcellulose, Na-Carboxymethylcellulose, Hydroxyethylcellulose oder Methylcellulose ausgewählt ist.

4. Verfahren zur Herstellung eines Futtermittelzusatzes mit verbesserter Stabilität gemäß Anspruch 1, 2 oder 3, dadurch gekennzeichnet, daß der Polymerüberzug unter Anwendung des Spaltkreisel-Dynamikfilter – Granulierungsverfahrens als 3 bis 10 %ige Lösung oder Suspension auf den Futtermit – telzusatz aufgesprüht wird.

## Claims

1. Feed additive with improved properties coated with a physiologically harmless polymer, characterised in that the polymer coating has a smooth, sealed surface, the proportion of polymer coating being between 2.5 and 30% by weight, based on the starting material, and is produced using the slotted gyro – dynamic filter granulating method.

2. Feed additive according to claim 1, characterised in that the feed additive contains zinc bacitracin.

3. Feed additive according to claim 1 or 2, characterised in that the coating material is selected from the group comprising hydroxypropylmethyl cellulose, Na – carboxymethyl cellulose, hydroxyethyl cellulose or methyl cellulose.

4. Process for preparing a feed additive with improved stability according to claim 1, 2 or 3, characterised in that the polymer coating is sprayed onto the feed additive in the form of a 3 to 10% solution or suspension by the slotted gyro – dynamic filter granulating method.

## Revendications

1. Additif alimentaire à propriétés améliorées revêtu d'un polymère acceptable du point de vue physiolo – gique, caractérisé en ce que le revêtement polymérique présente une surface lisse, fermée, la partie constituée par le revêtement polymérique représentant entre 2,5 et 30% en poids par rapport au produit de départ et étant appliquée au moyen du procédé de granulation à filtre dynamique et à rotor à fentes.

2. Additif alimentaire selon la revendication 1, caractérisé en ce qu'il contient de la bacitracine de zinc.

3. Additif alimentaire selon la revendication 1 ou 2, caractérisé en ce que la matière de revêtement est choisie dans le groupe formé par l'hydroxypropylméthylcellulose, la carboxyméthylcellulose sodique, l'hydroxyéthylcellulose et la méthylcellulose.

4. Procédé de fabrication d'un additif alimentaire à stabilité améliorée selon la revendication 1, 2 ou 3, caractérisé en ce que le revêtement polymérique est appliqué sur l'additif alimentaire par pulvérisation au moyen du procédé de granulation à filtre dynamique et à rotor à fentes sous forme d'une solution ou suspension à 3 – 10%.

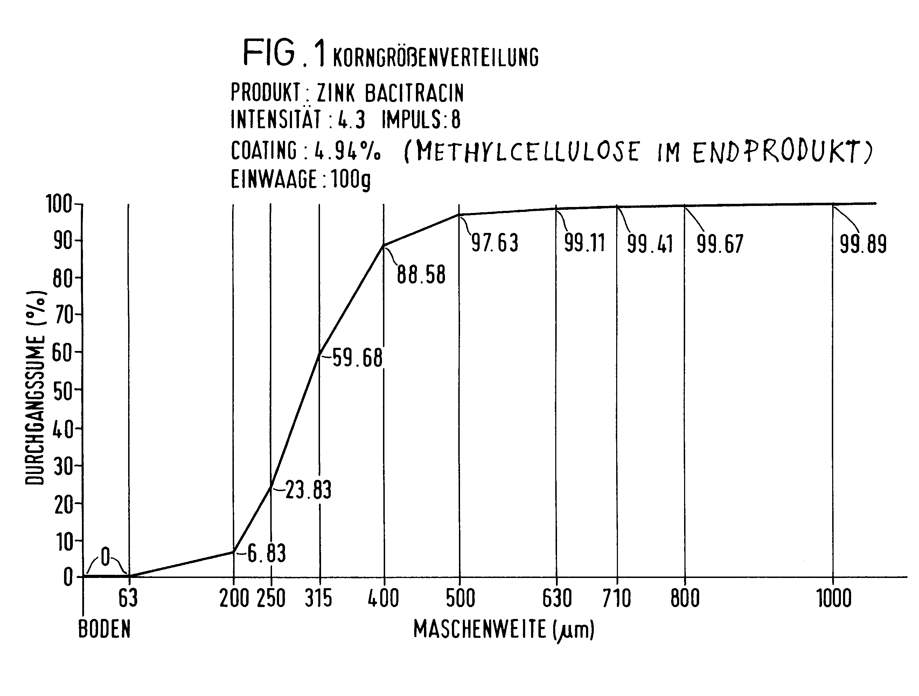

FIG.1 KORNGRÖßENVERTEILUNG

PRODUKT : ZINK BACITRACIN
INTENSITÄT : 4.3  IMPULS : 8
COATING : 4.94%  (METHYLCELLULOSE IM ENDPRODUKT)
EINWAAGE : 100g

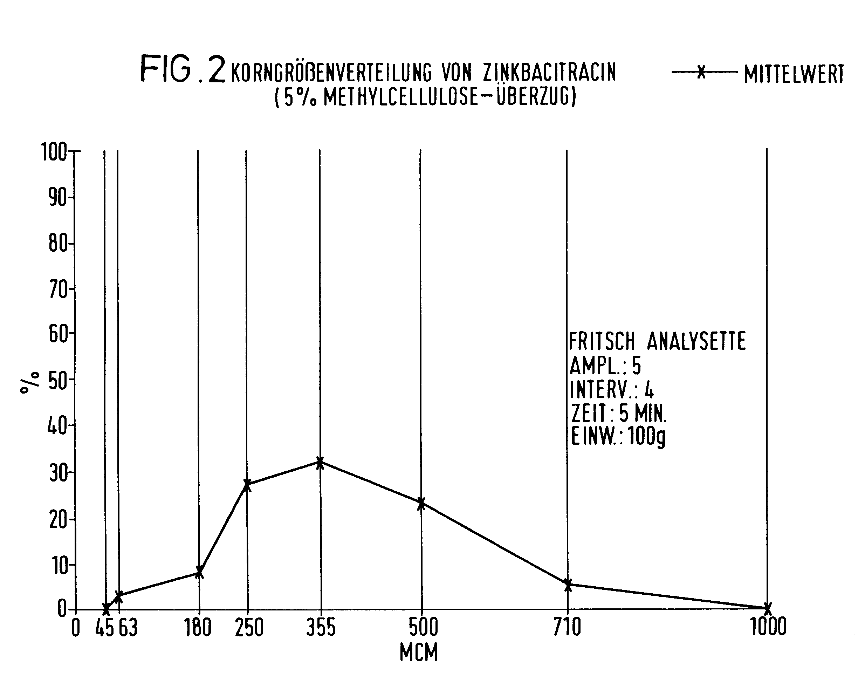

FIG.2 KORNGRÖSSENVERTEILUNG VON ZINKBACITRACIN ——×—— MITTELWERT
(5% METHYLCELLULOSE−ÜBERZUG)

FRITSCH ANALYSETTE
AMPL.: 5
INTERV.: 4
ZEIT: 5 MIN.
EINW.: 100g

EP 0 302 462 B1